# EUROPÄISCHE PATENTSCHRIFT

(11) **EP 2 754 589 B1**
(45) Veröffentlichungstag und Bekanntmachung des Hinweises auf die Patenterteilung: **22.02.2017**
(21) Anmeldenummer: 14150589.1
(22) Anmeldetag: 09.01.2014
(51) Int. Cl.: B60T 7/10

(54) **Betätigungsvorrichtung**
Actuation device
Dispositif d'actionnement

(30) Priorität: 11.01.2013 DE 202013100129 U
(43) Veröffentlichungstag der Anmeldung: 16.07.2014
(73) Patentinhaber: AL-KO Actuation Systems GmbH, 6277 Zellberg (AT)
(72) Erfinder: Sailer, Wolfgang, 6290 Mayrhofen (AT)
(74) Vertreter: Ernicke, Klaus Stefan

(56) Entgegenhaltungen:
- EP-A1- 1 650 092
- DE-A1- 19 954 823
- DE-U1-202004 014 335
- US-A1- 2010 242 666

## Beschreibung

Die Erfindung betrifft eine Betätigungsvorrichtung, insbesondere für eine Feststellbremse, mit den Merkmalen im Oberbegriff des Hauptanspruchs.

Eine solche Betätigungsvorrichtung ist aus der EP 1 273 495 A2 bekannt. Sie weist einen schwenkbaren Hebel mit einer Rasteinrichtung zur temporären Fixierung von verschiedenen Schwenkstellungen und eine Löseeinrichtung mit einem beweglichen Löseelement zum Öffnen und Lösen der Rasteinrichtung auf. Die Rasteinrichtung besitzt einen Sperrhebel und ein relativ ortsfestes bogenförmigen Rastsegment. Dass als Schubstange ausgebildete Löseelement und der Sperrhebel sind über Mitnahmeelemente im beweglichen Eingriff. Die jeweils längs zur Hebel- und Stangenerstreckung ausgerichteten Mitnahmeelemente befinden sich an den Enden des Sperrhebels und der Schubstange und bilden eine Klauen- oder Pfannenkupplung.

Die DE 20 2009 013 243 U1 zeigt eine ähnliche Betätigungsvorrichtung mit einer Klauenkupplung an den Enden von Schubstange und Sperrhebel.

Aus der DE 20 2004 014 335 U1 ist eine Betätigungsvorrichtung mit einem mehrteiligen Gestänge und einem hebelartigen Löseelement bekannt. Die Mitnahmeelemente sind als schräges Langloch im Sperrhebel und als durchgesteckter Querbolzen am gabelartigen Ende des Lösehebels ausgebildet.

Die DE 10 2005 013 475 A1 befasst sich mit einer Abwandlung des vorgenannten Standes der Technik, bei der der Steckbolzen am Lösehebel durch einen Quersteg ersetzt ist, der in eine Vertiefung des Sperrhebels eingreift, die an dem zu einem Rastbogen weisenden Hebelrand angeordnet ist.

Es ist Aufgabe der vorliegenden Erfindung eine verbesserte Betätigungsvorrichtung aufzuzeigen.

Die Erfindung löst diese Aufgabe mit den Merkmalen im Hauptanspruch.

Die beanspruchte Betätigungsvorrichtung hat verschiedene Vorteile. Sie zeichnet sich einerseits durch einen einfacheren und kostengünstigeren Aufbau und andererseits durch eine verbesserte Funktionalität und Sicherheit aus. Zudem ergeben sich Vorteile bei der Montage.

Die Betätigungsvorrichtung ermöglicht bei der Hebelbetätigung eine Relativbewegung zwischen dem Sperrhebel und dem Löseelement, wobei der vorzugsweise federbelastete Sperrhebel bei der Schwenkbewegung entlang des gebogenen Rastsegments Schwingbewegungen ausführen kann, die nicht oder nur wenig auf das Löseelement und ggf. weitere Teile eines Betätigungsgestänges übertragen werden. Eine sich erweiternde Nutenform ist hierfür von Vorteil.

Günstig ist ferner die Anordnung eines Mitnahmeelements, insbesondere von ein oder zwei seitlich abstehenden Bolzen, am mittleren Korpusbereich des Sperrhebels. Hier können einerseits Betätigungskräfte optimal eingeleitet werden. Andererseits stört in diesem Bereich das Mitnahmeelement nicht das Zusammenwirken von dem Sperrhebel und dem Rastsegment, insbesondere einem Rastbogen.

Die als seitlich abstehende Bolzen und als seitliche Aufnahmenuten ausgebildeten Mitnahmeelemente haben ferner den Vorteil einer einfachen und leicht zu montierenden Bauform. Hierfür ist auch eine Zugangsöffnung am einen, vorzugsweise unteren Stirnende der länglichen Aufnahmenut von Vorteil. Die Aufnahmeelemente können durch einfaches Zusammenstecken miteinander in Verbindung gebracht werden. Aufwändige Montagevorgänge wie bei der DE 20 2004 014 335 U1 mit Querstiften, die durch Durchgangsöffnungen gesteckt und danach fixiert werden, können entbehrlich sein.

In herstellungstechnischer Hinsicht besonders günstig ist eine Ausbildung des Sperrhebels mit ein- oder beidseitig abstehenden Bolzen, wobei die Aufnahmenuten am Löseelement und dort vorzugsweise im Bereich einer Durchgangsöffnung angeordnet sind, durch welche der Sperrhebel bei der Montage gesteckt werden kann. Diese Anordnung gestattet eine einteilige und besonders kostengünstige Herstellung und Montage von Sperrhebel und Löseelement.

Eine Durchgangsöffnung am Löseelement kann eine umfangseitig geschlossene Form haben. Sie kann auch eine Überlänge besitzen und außer dem Sperrhebel auch noch das Rastsegment, z.B. einen Rastbogen, aufnehmen und umgreifen. Hierdurch kann auch eine stabile Führung des Löseelements an dem relativ ortsfesten und bevorzugt an einem Gestell angeordneten Rastsegment erfolgen.

Die Gestaltung der Mitnahmeelemente kann außerdem für eine gegenseitige Führung von Sperrhebel und Löseelement vorteilhaft sein. Insbesondere kann eine Aufnahmenut versenkt an einem vorstehenden Sockel angeordnet sein. Der Sockel kann ggf. zusätzlich eine Führungsfunktion haben. In der bevorzugten Ausführungsform ist der Sperrhebel beidseits zwischen den Sockeln am Rand der Durchgangsöffnung des Löseelements seitlich geführt. Das Löseelement, der Sperrhebel und auch das Rastsegment können dabei in einer gegenseitigen seitlichen Führung zusammenwirken. Dies erleichtert die Montage und Ausrichtung von Sperrhebel und Löseelement und ermöglicht die Aufnahme evtl. Bauteil- und Lagetoleranzen.

Die bevorzugte Anordnung von ein oder mehreren Mitnahmeelementen am Sperrhebelkorpus zwischen einer Hebellagerung am einen Korpusende und einem Rastelement am anderen Korpusende hat einerseits den Vorteil einer besonders günstigen und direkten Krafteinleitung. Hierbei können auch Verformungen des Sperrhebels weitgehend vermieden werden. Andererseits kann der Sperrhebel schwächer und kostengünstiger dimensioniert werden als bei der EP 1 273 495 A2 oder der DE 20 2009 013 243 U1. Ein weiterer Vorteil ist die verkürzte Baulänge des Sperrhebels und die dadurch verkleinerbare Bauhöhe der Betätigungsvorrichtung und insbesondere des Hebels, vorzugsweise Handbremshebels.

Die Betätigungsvorrichtung ermöglicht außerdem eine beliebige und ggf. mehrteilige Ausgestaltung des Betätigungsgestänges, wobei auch der Korpus des Hebels, insbesondere Handbremshebels, besser an räumliche Gegebenheiten der Einbausituation in einem Fahrzeug, an Designvorgaben oder dgl. angepasst werden kann. Er kann insbesondere eine mehrfach abgewinkelte Formgebung haben. Durch die Eingriffstoleranzen der bolzen- und nutenförmigen Mitnahmeelemente können auch Bauteil- und Montagetoleranzen des Betätigungsgestänges und des Hebelkorpus aufgenommen werden.

Die Ausbildung der Betätigungsvorrichtung hat ferner Vorteile für die Ausbildung des Hebels, insbesondere Handbremshebels. Der Hebel, insbesondere sein Hebelkorpus, kann als kostengünstiges Guss- oder Spritzteil aus Kunststoff, Metall oder anderen geeigneten Werkstoffen hergestellt sein. Die Aufnahme und Montage des Betätigungsgestänges ist dabei besonders günstig. Vorteilhaft ist auch die Möglichkeit zur Anordnung einer am Hebel angreifenden Feder, vorzugsweise einer Totpunktfeder. Die Feder kann einerseits die Ruhelage sichern und Relativbewegungen, insbesondere ein Klappern in der Löse- und Ruhestellung, vermeiden. Außerdem kann im Falle einer Totpunktfeder bei Überschreiten des Totpunkts eine die Handkraft bei der Hebelbetätigung unterstützende Federkraft entwickelt werden.

In einer Ausführungsform ist der Sperrhebel als Sperrklinke mit einer Feder ausgebildet. Das Rastsegment kann als Rastbogen mit mehreren Rastzähnen ausgebildet sein. Es ist ferner sinnvoll, das Rastsegment und den Hebel, insbesondere Handbremshebel, mit seinem Schwenklager an einem Gestell der Betätigungsvorrichtung anzuordnen.

Zur Umsetzung der Betätigungsfunktion kann der Hebel, insbesondere Handbremshebel, eine Verbindung zu einem Betätigungszug aufweisen. Dieser kann z.B. zu Radbremsen oder zu einem vorgeschalteten Waagbalken führen.

In den Unteransprüchen sind weitere vorteilhafte Ausgestaltungen der Erfindung angegeben.

Die Erfindung ist in Zeichnungen beispielhaft und schematisch dargestellt. Im einzelnen zeigen:
- Figur 1:: eine Draufsicht auf eine Betätgigungsvorrichtung,
- Figur 2:: eine geschnittene Seitenansicht der Betätigungsvorrichtung gemäß Schnittlinie II-II von Figur 1,
- Figur 3:: einen vergrößerten Ausschnitt III der Betätigungsvorrichtung von Figur 2,
- Figur 4:: einen vergrößerten Ausschnitt IV der Betätigungsvorrichtung von Figur 1,
- Figur 5:: eine perspektivische Darstellung eines Lösehebels und
- Figur 6:: eine perspektivische Darstellung eines Sperrhebels.

Die Erfindung betrifft eine Betätigungsvorrichtung (1) mit einem schwenkbaren Hebel (2). Vorzugsweise kann die Betätigungsvorrichtung (1) zum Betätigen einer Feststellbremse in einem Fahrzeug, insbesondere einem Kraftfahrzeug eingesetzt werden.

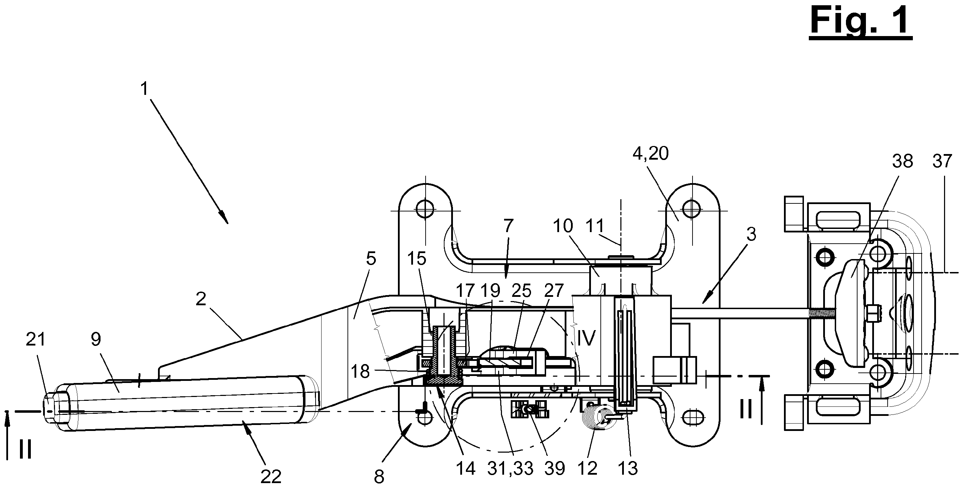

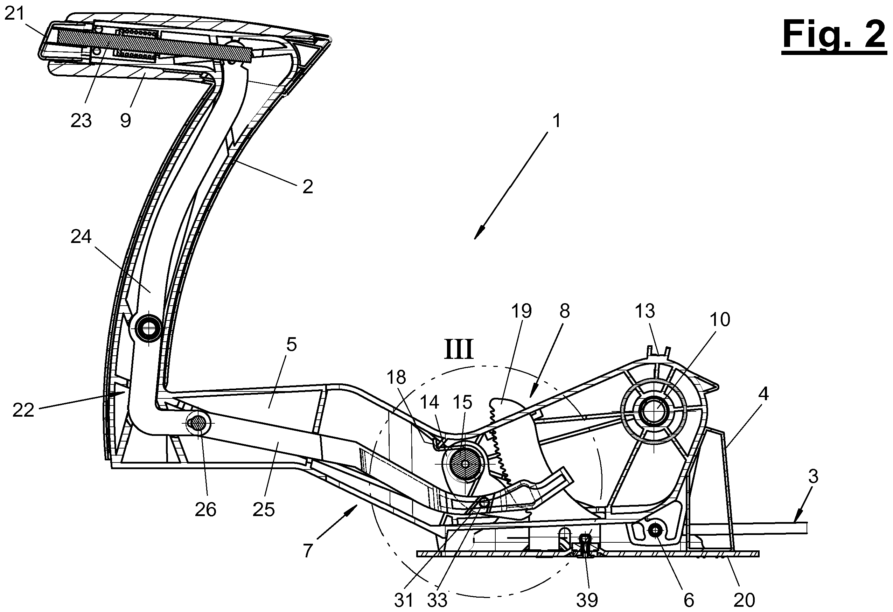

Figur 1 und 2 zeigen in der Draufsicht und im Längsschnitt eine Ausführungsform einer solchen Betätigungsvorrichtung (1) für die Feststellbremse in einem Kraftfahrzeug. Die Betätigungsvorrichtung (1) weist einen Hebel (2) auf, der um ein Schwenklager (10) an einem Gestell (4) drehbar gelagert ist. Der Hebel (2) ist in diesem Ausführungsbeispiel als Handbremshebel ausgebildet ist und weist einen Hebelkorpus (5) mit einem Griff (9) auf. Der Hebel (2) hat ferner eine Verbindung (6) zu einem Betätigungszug (3), der mit den Radbremsen verbunden ist. Der Betätigungszug (3) besteht z.B. gemäß Figur 1 aus einer mit dem Hebel (2) verbundenen Zugstange, die am Ende mit einem Waagbalken (38) verbunden ist, an dem mehrere, z.B. zwei, Seilzüge (37) der Feststellbremse eingehängt sind. Das Gestell (4) ist zum Einbau in einer Fahrzeugkarosserie vorgesehen und entsprechend ausgebildet. Es weist z.B. ein plattenförmiges Bodenteil (20) und einen Lagerbock zur Aufnahme des Schwenklagers (10) auf.

Die Betätigungsvorrichtung (1) weist ferner eine Rasteinrichtung (7) zur temporären Fixierung des Hebels (2) in verschiedenen Schwenkstellungen und eine Löseeinrichtung (8) zum Lösen bzw. Öffnen der Rasteinrichtung (7) auf. Die Rasteinrichtung (7) und die Löseeinrichtung (8) können in unterschiedlicher Weise ausgebildet sein.

Im gezeigten Ausführungsbeispiel besitzt die Rasteinrichtung (7) gemäß Figur 2 ein relativ ortsfestes Rastsegment (19), welches z.B. am Gestell (4), insbesondere am Bodenteil (20) stationär angeordnet ist. Mit dem Rastsegment (19) wird die vom Betätigungszug (3) eingeleitete Rückstellkraft der angezogenen Feststellbremse am Gestell (4) abgestützt. Das bevorzugt plattenförmige Rastsegment (19) ist z.B. als Rastbogen (19) ausgebildet, der mehrere Rastzähne aufweist. Diese sind z.B. als Zahnreihe am gebogenen Außenrand des konzentrisch um die Achse (11) des Schwenklagers (10) gekrümmten Rastbogens (19) angeordnet. Das Rastsegment (19) kann aus beliebigem Material, vorzugsweise aus Metall, bestehen und kann ein Blechteil sein.

Ferner weist die Rasteinrichtung (7) einen schwenkbaren Sperrhebel (14) auf, der mit dem Rastsegment (19) zusammenwirkt und der mittels eines Hebellagers (15) am Hebel (2) bzw. dessen Korpus (5) schwenkbar gelagert ist. Der Sperrhebel (14) kann von einer Feder (18), z.B. einer Torsionsfeder, insbesondere Schenkelfeder, beaufschlagt werden, die den Sperrhebel (14) zum Rastsegment (19) hin schwenkt und dort andrückt. Der Sperrhebel (14) ist z.B. als Sperrklinke ausgebildet und weist ein Rastelement, z.B. einen Rastzahn (16) auf, der mit dem Gegenzähnen am Rastsegment (19) unter Federwirkung in Eingriff tritt. Der Rastzahn (16) kann einfach oder mehrfach vorhanden sein.

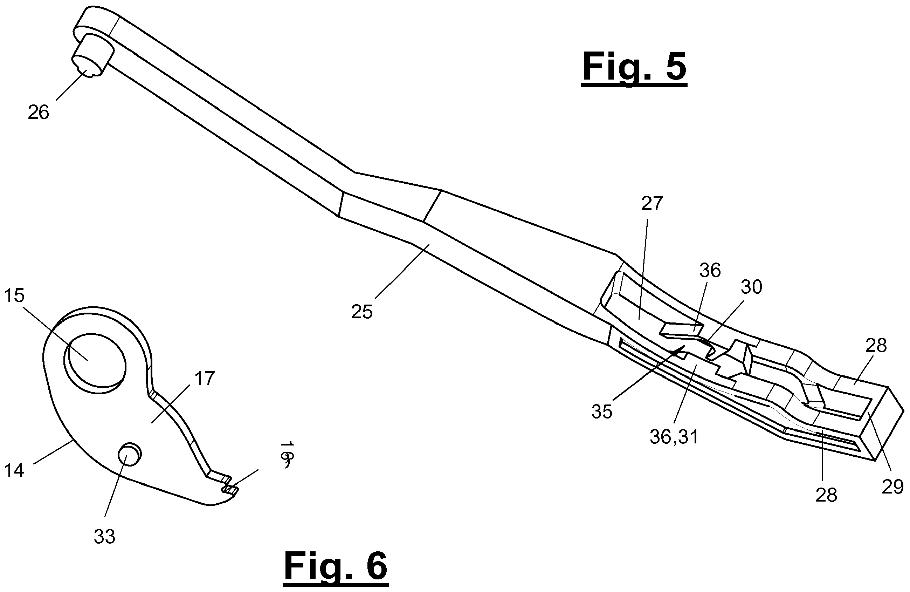

Figur 6 verdeutlicht in einer perspektivischen Darstellung die Ausbildung des Sperrhebels (14). Dieser besitzt einen Korpus bzw. Klinkenkorpus (17), der an dem einen, insbesondere oberen, Ende das Hebellager bzw. Klinkenlager (15) aufweist, welches z.B. ein Lagerauge hat. Am gegenüberliegenden anderen Korpusende ist ein Rastzahn (16) angeordnet. Der Korpus (17) kann eine dünne und zum größten Teil ebene Platten- oder Scheibenform haben. Er besteht aus einem geeigneten Material, bevorzugt Metall, evtl. auch aus Kunststoff oder einem Verbundmaterial. Er kann z.B. als Spritz- oder Gußteil, aber auch als geschnittenes und gebogenes bzw. geprägtes Blechteil, ausgeführt sein.

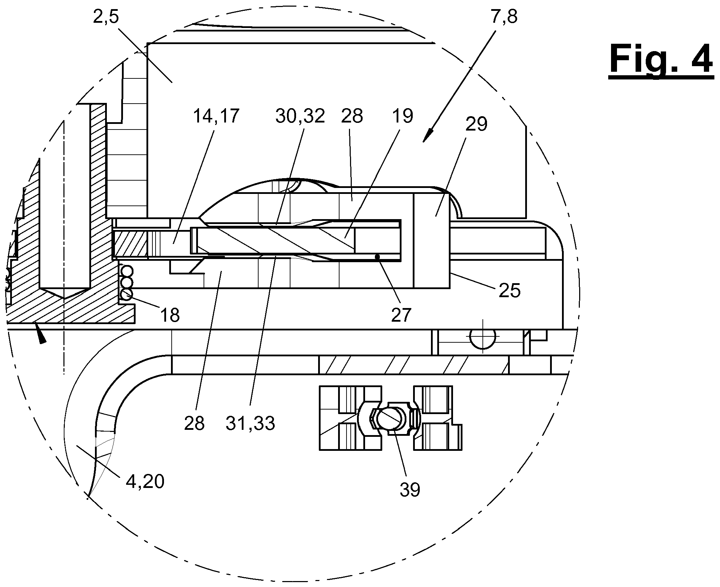

Wie Figur 1 im teilweise aufgebrochenen Bereich und Figur 4 im Ausschnitt IV verdeutlichen, kann das Hebellager (15) ferner einen Lagerbolzen umfassen, auf dem der Korpus (17) mit dem Lagerauge frei drehbar aufgesteckt ist, wobei der Lagerbolzen am Hebelkorpus (5) fixiert ist. Am Lagerbolzen kann außerdem die Feder (18) aufgenommen sein.

Die Löseeinrichtung (8) weist ein bewegliches Löseelement (25) auf, welches mit dem Sperrhebel (14) verbunden ist und vom Bediener mittels eines am Griff (9) oder an anderer geeigneter Stelle angeordneten Löseknopfes (21) betätigt werden kann. Bei Betätigung schwenkt das Löseelement (25) den Sperrhebel (14) gegen die Feder (18) zurück und löst den Verzahnungseingriff mit dem Rastsegment (19). Der Hebel (2) kann dann verschwenkt werden. Das Löseelement (25) ist von einer rückstellenden Feder belastet, die z.B. im Griff (9) angeordnet ist und die nach Freigabe des Löseknopfes (21) das Löseelement (25) unter Mitnahme des Sperrhebels (14) in die Sperr- oder Raststellung zurückbewegt.

Der Sperrhebel (14) und das Löseelement (25) sind miteinander über Mitnahmeelemente (30,31,32,33) in einem beweglichen formschlüssigen Eingriff verbunden. Die Mitnahmeelemente (30,31,32,33) sind jeweils seitlich am Löseelement (25) und am Sperrhebel (14) angeordnet. Ein Mitnahmeelement (30,31) ist als seitlich offene Aufnahmenut und ein anderes Mitnahmeelement (32,33) ist als seitlich abstehender und in die Aufnahmenut (30,31) greifender Bolzen ausgebildet. Die genannte seitliche Zuordnung bezieht sich jeweils auf die Haupt- oder Mittelebene von Sperrhebel (14) und Löseelement (25).

Im gezeigten und bevorzugten Ausführungsbeispiel sind zwei Aufnahmenuten (30,31) und zwei Bolzen (32,33) vorhanden. In einer anderen Variante kann nur eine Aufnahmenut und nur ein Bolzen vorhanden sein. In einer weiteren Abwandlung kann die Bolzen- und Nutenzahl auch größer als jeweils zwei sein.

Die Zuordnung der Aufnahmenuten (30,31) und der Bolzen (32,33) zum Sperrhebel (14) und zum Löseelement (25) kann unterschiedlich ausgebildet sein. Im gezeigten Ausführungsbeispiel sind ein oder mehrere seitlich abstehende Bolzen (32,33) dem Sperrhebel (14) und eine oder mehrere Aufnahmenuten (30,31) dem Löseelement (25) zugeordnet. Die Zuordnung kann bei entsprechend geänderter konstruktiver Ausführung auch umgekehrt sein.

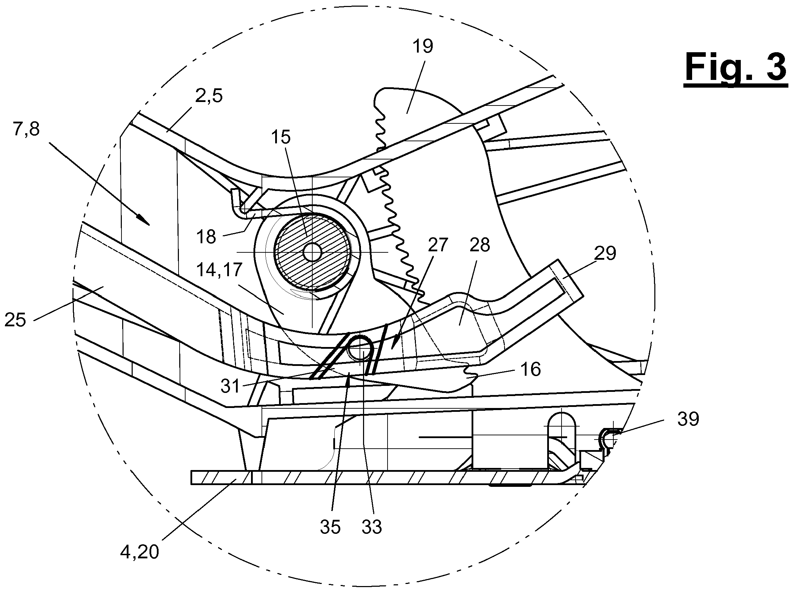

Die ein oder mehreren Bolzen (32,33) sind am Korpus (17) angeordnet und erstrecken sich mit ihren Bolzenachsen quer zu dessen Hauptebene. In der gezeigten Ausführung sind zwei Bolzen (32,33) beidseits und mit fluchtenden Bolzenachsen am Korpus (17) angeordnet. Der oder die Bolzen (32,33) befinden sich im mittleren Korpusbereich und sind zwischen den Korpusenden angeordnet. Von diesen bzw. vom Hebellager (15) und vom Rastzahn (16) sind sie jeweils distanziert. Die Bolzen (32,33) sind dabei auch von dem Seitenrand des Korpus (17) distanziert, der in der in Figur 3 gezeigten Einbaustellung dem Rastsegment (19) und dessen Zahnleiste zugewandt ist.

Die ein oder mehreren Aufnahmenuten (30,31) sind am Löseelement (25) im Bereich einer Durchgangsöffnung (27) angeordnet, durch welche der Sperrhebel (14) bzw. sein Korpus (17) ragt. Die Durchgangsöffnung (27) ist am rückwärtigen und in Figur 2 rechten Ende des Löseelements (25) angeordnet. Sie hat eine lang gestreckte schlitzartige Form und ist nach oben und unten offen. Die Durchgangsöffnung (27) kann einen umlaufenden geschlossenen Rand aufweisen, der von beidseitigen Längsstegen (28) und am rückwärtigen Schmalende von einem verbindenden Quersteg (29) gebildet wird. Der gegenüberliegende Quersteg wird vom massiven Korpus des Löseelements (25) gebildet.

Die Aufnahmenuten (30,31) sind am Rand der Durchgangsöffnung (27) angeordnet, weisen zur Öffnungsmitte und können sich an den Längsstegen (28) befinden. Die Aufnahmenuten (30,31) sind einander gegenüberliegend angeordnet und treten mit den beidseitigen Bolzen (32,33) an dem zwischen ihnen befindlichen Korpus (17) in Eingriff. Die Aufnahmenuten (30,31) können sich dabei an jeweils einem Sockel (36) befinden und dort stirnseitig eingeformt sein. Der Sockel (36) steht von seinem zugehörigen Längssteg (28) jeweils nach innen ab und ragt in die Durchgangsöffnung (27). Im Bereich zwischen den Sockeln (36) und den Aufnahmenuten (30,31) ist die Weite oder Breite der Durchgangsöffnung (27) lokal verkleinert. Sie kann so groß bemessen sein, dass der Korpus (17) zwischen den Sockelfronten mit ausreichend Spiel beweglich geführt ist. In den anderen Bereichen kann die Durchgangsöffnung (27) wieder eine größere Weite bzw. Schlitzbreite aufweisen.

Die Aufnahmenut (30,31) weist an ihrer einen Stirnseite, insbesondere an ihrer Unterseite eine Zugangsöffnung (35) auf, die den Zugang eines Bolzens (32,33) in die Nut (30,31) erlaubt und das in Figur 2 und 3 gezeigte Aufstecken der Aufnahmenut (30,31) auf den jeweiligen Bolzen (32,33) ermöglicht. Am gegenüberliegenden oberen Ende ist die Aufnahmenut (30,31) geschlossen und liegt hier mit der Nutenwandung auf dem jeweiligen Bolzen (32,33) in der gezeigten Betriebsstellung auf. Die länglichen Aufnahmenuten (30,31) haben jeweils eine zu der Zugangsöffnung (35) hin sich erweiternde Form, die einen Spielraum für Schwenkbewegungen des Sperrhebels (14) und des eingeführten Bolzen (32,33) ermöglicht. Die Aufnahmenut (30,31) hat einen Boden, und besitzt eine Tiefe, die etwas größer als die Bolzenlänge ist.

Die Länge der Durchgangsöffnung (27) ist größer als die Breite und der Schwenkraum des Sperrhebels (14). Sie reicht rückseitig über diesen hinaus, wobei sie in diesem Bereich das Rastsegment (19) mit den Längsstegen (28) und dem Quersteg (29) an drei Seiten umgreift. Die Öffnungsweite ist auf die Dicke des bevorzugt plattenförmigen Rastsegments (19) abgestimmt, sodass das Löseelement (25) am Rastsegment (19) mit Bewegungsspiel geführt ist.

In der gezeigten Ausführungsform ist das Löseelement (25) Bestandteil eines Betätigungsgestänges (22), das eine oder mehrere weitere Teile aufweisen kann. Das Betätigungsgestänge (22) hat z.B. eine obere Druckstange (23), die im Griffbereich des Hebels (2) axial verschieblich geführt und von einer in Figur 2 dargestellten Feder beaufschlagt ist. Am vorderen Ende steht die Druckstange (23) mit dem Löseknopf (21) in Verbindung. Am rückwärtigen Ende ist sie über eine geeignete Lagerung, insbesondere Schwenklagerung, mit einem schwenkbaren Zwischenhebel (24) verbunden, der zwei Arme aufweist und um ein Schwenklager am Hebel (2) drehbar gelagert ist. Der eine obere Arm ist mit der Druckstange (23) verbunden und der andere untere, jenseits des Schwenklagers befindliche und abgewinkelte Arm ist mit dem Löseelement (25) über eine Lagerung (26) verbunden.

In dieser Ausführungsform ist das Löseelement (25) als schwenkbarer Lösehebel gestaltet, der an seinem der Durchgangsöffnung (27) gegenüberliegenden, vorderen Ende den in Figur 5 gezeigten quer abstehenden Zapfen zur Bildung eines schwenkbaren Hebellagers (26) aufweist. Der lang gestreckte Lösehebel (25) kann außerdem die gezeigte abgekröpfte Form haben. Das Löseelement (25), insbesondere der Lösehebel kann als Formteil, insbesondere Spritz- oder Gußteil, aus Kunstsoff oder Metall oder einem anderen geeigneten Material ausgebildet sein.

Das Betätigungsgestänge (22) ist im oder am Hebelkorpus (5) angeordnet und folgt dessen Kontur. In der gezeigten Ausführungsform hat der Hebel (2) eine mehrfach abgewinkelte und z.B. Z-förmige Gestalt. Der Lösehebel (25) ist an einem Ende am Hebellager (26) und am anderen Ende mit den im Eingriff stehenden Mitnahmeelementen (30,31,32,33) abgestützt.

Wenn zum Lösen des Hebels bzw. Handbremshebels (2) der Löseknopf (21) gedrückt wird, dreht die eingeschobene Druckstange (32) den Zwischenhebel (24) gemäß Figur 2 im Uhrzeigersinn. Hierdurch wird der Lösehebel (25) gemäß Figur 2 nach links gezogen und nimmt dabei den Sperrhebel (14) mit, der sich ebenfalls im Uhrzeigersinn dreht und den Zahnungseingriff löst. Der Quersteg (29) kann den Hub des Lösemittels bzw. Lösehebels (25) durch Anschlag am Rastsegment (19) ggf. begrenzen.

Der Hebel (2) kann bei gelöster Rasteinrichtung (7) im Uhrzeigersinn gemäß Figur 2 nach oben geschwenkt werden, wobei der Rastzahn (16) ggf. an der Gegenverzahnung des Rastsegments (19) entlang gleitet und durch die Zahnform eine entsprechende oszillierende ratschende Schwenkbewegung des Sperrhebels (14) induziert. Ein solches Schwenken des Hebels (2) ist auch ohne Lösen der Rasteinrichtung (7) möglich, wobei der Sperrhebel (14) über die Gegenverzahnung ratscht. Die erweiterte Form der Aufnahmenut(en) (30,31) gestattet diese Schwenkbewegungen, ohne dass das Löseelement (25) dabei mitgenommen wird und eine signifikante entsprechende oszillierende Schwingbewegung ausführt. Der Sperrhebel (14) kann sich vielmehr relativ zum Löseelement (25) bewegen.

Bei der Ausführung als Lösehebel (25) mit endseitigem Hebellager (26) kann die vom Hebellager (26) abgewandte Seitenwand der Aufnahmenut (30,31) eine im wesentlichen quer zur Zugrichtung des Lösehebels (25) ausgerichtete Lage haben. Die Wandausrichtung kann z.B. tangential zu einem Kreis um das Hebellager (26) verlaufen. Durch die steile Wandneigung werden Zugbewegungen des Betätigungsgestänges (22) und des Lösehebels (25) sofort in eine Mitnahme des Sperrhebels (14) umgesetzt. Die andere, zum Hebellager (26) hinweisende seitliche Seitenwand der Aufnahmenuten (30,31) kann schräg und zum Hebellager (26) hin ausgerichtet sein, wodurch sich die trichterartig erweitere Nutenform ergibt.

Durch die Auflage der Aufnahmenut (30,31) mit ihrem geschlossenen oberen Stirnende auf dem Bolzen (32,33) und die besagte erweitere Nutenform werden die oszillierenden Schwenkbewegungen des Sperrhebels (14) lediglich in eine im wesentlichen senkrechte Schwingbewegung des Lösehebels (25) um das Hebellager (26) umgesetzt, ohne dass eine signifikante Bewegungsrückkopplung auf die anderen Teile des Bewegungsgestänges (22) erfolgt. Die Ratschbewegung des Sperrhebels (14) wird im Bewegungsspiel der Aufnahmenut (30,31) kompensiert.

Der Hebelkorpus (5) kann in beliebig geeigneter Weise ausgebildet sein. Im gezeigten und bevorzugten Ausführungsbeispiel hat er die genannte mehrfache abgewinkelte Form mit dem innenliegenden und vorzugsweise unsichtbaren Betätigungsgestänge (22). Im inneren des Hebelkorpus (5) sind außerdem der Sperrhebel (14) und ein Teil des Rastsegments (19) aufgenommen. In diesen Bereich hat der Hebel (2) und der Hebelkorpus (5) eine besonders niedrige Bauhöhe.

Der Hebelkorpus (5) kann einteilig oder mehrteilig ausgebildet sein. Er kann aus beliebig geeigneten Materialien bestehen. Bevorzugt ist er als Guss- oder Spritzteil ausgeführt und kann aus Kunststoff, Metall oder ggf. auch aus anderen Materialien, insbesondere auch aus Verbundmaterialien bestehen. Der Hebelkorpus (5) kann einschalig ausgebildet sein, wobei ggf. nur die im Einbauzustand außerhalb der umgebenen Karosserie liegenden und offen sichtbaren Korpusbestandteile mit einer zusätzlichen Umhüllung, einem Deckel oder dgl. verschlossen sind. Alternativ kann der Hebelkorpus (5) eine geteilte Schalenform besitzen, wobei die Schalenhälften nach der Montage fest oder lösbar verbunden werden. Bei der Montage kann das Löseelement (25) über das Rastsegment (19) und den Klinkenkorpus (17) gesteckt und anschließend an den Bolzen (32,33) eingehängt werden.

In der gezeigten Ausführungsform kann der Hebel (2) weitere Komponenten aufweisen. Er kann zum einen eine in Figur 1 gezeigte Feder (12) aufweisen, die zumindest den Hebel (2) in der abgeschwenkten Löse- und Ruhestellung hält. Die Feder (12) kann wie in der gezeigten Ausführungsform auch als Totpunktfeder ausgebildet sein, die nach Überschreiten eines vorgegebenen Schwenkwegs des Hebels (2) und ihres Totpunkts eine die weitere Schwenkbewegung des Hebels (2) unterstützende Kraft entwickelt. Die Feder (12) ist hierfür z.B. im Bereich des Hebellagers (10) angeordnet, wobei sie mit dem einen Ende am Gestell (4) und mit dem anderen Ende an einem Federhalter (13) am Hebel (2) eingehängt ist, welcher sich in geeigneter Position gegenüber der Lagerachse (11) befindet und z.B. mit geringem seitlichen Versatz oberhalb von dieser angeordnet ist, wobei die Feder (12) eine Schräglage hat.

Ferner kann der Hebel (2) eine Sensorik (39) aufweisen, welche die Einnahme der besagten Löse- und Ruhestellung des Hebels (2) detektiert. Hierfür kann ein geeigneter Sensor am Bodenteil (20) angeordnet sein und in dieser Ruhestellung mit dem Hebelkorpus (5) oder einem Anbauteil kontaktiert werden.

Abwandlungen der gezeigten und beschriebenden Ausführungsformen sind in verschiedener Weise möglich. Die Zuordnung der Mitnahmeelemente (30,31,32,33) kann umgekehrt sein, wobei sich die Aufnahmenut(en) (30,31) am Sperrhebel (14) und der oder die Bolzen (32,33) am Löseelement (25) befinden. In diesem Fall kann die Nutenrichtung umgekehrt sein, wobei die Zugangsöffnung (35) nach oben weist. Bei allen Varianten von Mitnahmeelementen ist eine einseitige Anordnung und der Einsatz von nur einem Paar von Mitnahmeelementen (30,32) möglich. Die Paarungszahl kann auch größer sein.

In einer weiteren Abwandlung kann der umgebende Rand der Durchgangsöffnung (27) an ein oder mehreren Seiten offen sein, wobei z.B. eine Gabelform entstehen kann. Einerseits kann der Quersteg (29) an einem Stirnende entfallen. Andererseits kann nur ein Längssteg (28) vorhanden sein, sodass die Durchgangsöffnung (27) die Form einer seitlichen Einbuchtung am Korpus des Löseelements (25) hat. In diesem Fall kann die Seitenführung des Löseelements (25) auf andere Weise, z.B. durch Stege oder dgl. am Hebelkorpus (5), erfolgen.

In der bevorzugten Ausführungsform hat der Sperrhebel (14) die gezeigte einarmige Formgebung mit Hebellager (15) und Rastzahn (16) an gegenüberliegenden Enden. Alternativ ist eine zweiarmige oder mehrarmige Gestaltung möglich, wobei die nuten- und bolzenförmigen Aufnahmeelemente entsprechend anders ausgebildet und angeordnet sind. Z.B. ist eine Anordnung an einem anderen Arm des Sperrhebels (14) möglich. Ferner kann das Betätigungsgestänge (22) entfallen bzw. nur aus dem Löseelement (25) bestehen. Dieses kann auch z.B. als Schubstange mit einer Lagerung (26) im oder am Hebel (2) ausgebildet sein, wobei die Lagerung eine Schiebeführung sein kann. Ferner sind beliebige andere Abwandlungen eines mehrteiligen Betätigungsgestänges (22) möglich. Der Hebel (2) kann anders ausbebildet sein und betätigt werden, z.B. als Pedal.

Die Merkmale der vorbeschriebenen Ausführungsbeispiele und ihrer Abwandlungen können in unterschiedlicher Weise abgeändert, insbesondere miteinander kombiniert werden, wobei auch Merkmalsvertauschungen und ggf. Entfall einzelner Merkmal möglich sind.

### BEZUGSZEICHENLISTE

- 1: Betätigungsvorrichtung
- 2: Hebel, Handbremshebel
- 3: Betätigungszug
- 4: Gestell
- 5: Hebelkorpus
- 6: Verbindung zu Seilzug
- 7: Rasteinrichtung
- 8: Löseeinrichtung
- 9: Griff
- 10: Schwenklager
- 11: Achse, Lagerachse
- 12: Feder, Totpunktfeder
- 13: Federhalter
- 14: Sperrhebel, Sperrklinke
- 15: Hebellager, Klinkenlager
- 16: Rastzahn
- 17: Korpus, Klinkenkorpus
- 18: Feder
- 19: Rastsegment, Rastbogen
- 20: Bodenteil
- 21: Löseknopf
- 22: Betätigungsgestänge
- 23: Druckstange
- 24: Zwischenhebel
- 25: Löseelement, Lösehebel
- 26: Lagerung, Hebellager
- 27: Durchgangsöffnung, Hebelöffnung
- 28: Steg, Längssteg
- 29: Steg, Quersteg
- 30: Mitnahmeelement, Aufnahmenut
- 31: Mitnahmeelement, Aufnahmenut
- 32: Mitnahmeelement, Bolzen
- 33: Mitnahmeelement, Bolzen
- 34: Aufnahmenut
- 35: Zugangsöffnung
- 36: Sockel
- 37: Seilzug
- 38: Waagbalken
- 39: Sensor

## Patentansprüche

1. Betätigungsvorrichtung, insbesondere für eine Feststellbremse, wobei die Betätigungsvorrichtung (1) einen schwenkbaren Hebel (2) mit einer Rasteinrichtung (7) zur temporären Fixierung von Hebelstellungen und eine Löseeinrichtung (8) mit einem beweglichen Löseelement (25) zum Lösen der Rasteinrichtung (7) aufweist, wobei die Rasteinrichtung (7) einen Sperrhebel (14) und ein relativ ortsfestes Rastsegment (19) aufweist und wobei der Sperrhebel (14) und das Löseelement (25) miteinander über Mitnahmeelemente (30,31,32,33) im beweglichen Eingriff stehen, **dadurch gekennzeichnet, dass** ein Mitnahmeelement (30,31) als seitlich offene Aufnahmenut und ein anderes Mitnahmeelement (32,33) als seitlich abstehender und in die Aufnahmenut greifender Bolzen ausgebildet ist.

2. Betätigungsvorrichtung nach Anspruch 1, **dadurch gekennzeichnet, dass** die Mitnahmeelemente (30,31,32,33) seitlich am Löseelement (25) und am Sperrhebel (14) angeordnet sind.

3. Betätigungsvorrichtung nach Anspruch 1 oder 2, **dadurch gekennzeichnet, dass** mehrere, insbesondere zwei, Paare von Mitnahmeelementen (30,31,32,33) vorgesehen sind.

4. Betätigungsvorrichtung nach Anspruch 1, 2 oder 3, **dadurch gekennzeichnet, dass** die Aufnahmenut (30,31) an einer Stirnseite, insbesondere an der Unterseite, eine Zugangsöffnung (35) für einen Bolzen (32,33) aufweist.

5. Betätigungsvorrichtung nach einem der vorhergehenden Ansprüche, **dadurch gekennzeichnet, dass** die Aufnahmenut (30,31) sich zur Zugangsöffnung (35) hin erweitert.

6. Betätigungsvorrichtung nach einem der vorhergehenden Ansprüche, **dadurch gekennzeichnet, dass** an einem Korpus (17) des Sperrhebels (14) ein oder mehrere, insbesondere zwei, seitlich abstehende Bolzen (32,33) angeordnet ist oder sind und am Löseelement (25) eine oder mehrere, insbesondere zwei, Aufnahmenuten (30,31) angeordnet ist oder sind.

7. Betätigungsvorrichtung nach einem der vorhergehenden Ansprüche, **dadurch gekennzeichnet, dass** das Löseelement (25) eine vorzugsweise umfangseitig geschlossene Durchgangsöffnung (27) für den Sperrhebel (14) aufweist.

8. Betätigungsvorrichtung nach Anspruch 7, **dadurch gekennzeichnet, dass** am Rand der Durchgangsöffnung (27) einander gegenüberliegende Sockel (36) mit Aufnahmenuten (30,31) angeordnet sind.

9. Betätigungsvorrichtung nach einem der vorhergehenden Ansprüche 7 oder 8, **dadurch gekennzeichnet, dass** die Durchgangsöffnung (27) über den Sperrhebel (14) hinausreicht und auch das Rastsegment (19) übergreift.

10. Betätigungsvorrichtung nach einem der vorhergehenden Ansprüche 7 bis 9, **dadurch gekennzeichnet, dass** das Löseelement (25) als Teil eines Betätigungsgestänges (22), insbesondere als schwenkbarer Lösehebel, ausgebildet ist, der am einen Ende die Durchgangsöffnung (27) mit einem Aufnahmeelement (30,31,32,33) und am anderen Ende eine Lagerung (26) aufweist.

11. Betätigungsvorrichtung nach Anspruch 10, **dadurch gekennzeichnet, dass** der Lösehebel (25) mittels der Lagerung (26) mit einem anderen Teil des Betätigungsgestänges (22), insbesondere einem schwenkbaren Zwischenhebel (24), verbunden ist.

12. Betätigungsvorrichtung nach einem der vorhergehenden Ansprüche, **dadurch gekennzeichnet, dass** der Sperrhebel (14) am einen Ende seines Korpus (17) ein Hebellager (15) und am anderen Ende ein Rastelement (16), insbesondere einen Rastzahn, aufweist.

13. Betätigungsvorrichtung nach Anspruch 12, **dadurch gekennzeichnet, dass** das Mitnahmeelement (30,31,32,33) am Korpus (17) zwischen dem Hebellager (15) und dem Rastelement (16) angeordnet ist.

14. Betätigungsvorrichtung nach Anspruch 10, **dadurch gekennzeichnet, dass** der Hebel (2) als Handbremshebel mit einem Griff (9) und einem Hebelkorpus (5) ausgebildet ist, wobei im Hebelkorpus (5) das Betätigungsgestänge (22) und ein griffseitiger Löseknopf (21) angeordnet sind, wobei das Betätigungsgestänge (22) eine mit dem Löseknopf (21) verbundene Druckstange (23), ggf. einen Zwischenhebel (24) und den Lösehebel (25) aufweist.

15. Betätigungsvorrichtung nach einem der vorhergehenden Ansprüche, **dadurch gekennzeichnet, dass** am Hebel (2) eine Totpunktfeder (12) angeordnet ist.

## Claims

1. Actuating apparatus, in particular for a parking brake, the actuating apparatus (1) having a pivotable lever (2) with a latching device (7) for temporarily fixing lever positions and a release device (8) with a movable release element (25) for releasing the latching device (7), the latching device (7) having a locking lever (14) and a latching segment (19) which is stationary in a relative manner, and the locking lever (14) and the release element (25) being in movable engagement with one another via driving elements (30, 31, 32, 33), **characterized in that** one driving element (30, 31) is configured as a laterally open receiving groove, and another driving element (32, 33) is configured as a laterally projecting pin which engages into the receiving groove.

2. Actuating apparatus according to Claim 1, **characterized in that** the driving elements (30, 31, 32, 33) are arranged laterally on the release element (25) and on the locking element (14).

3. Actuating apparatus according to Claim 1 or 2, **characterized in that** a plurality of, in particular two, pairs of driving elements (30, 31, 32, 33) are provided.

4. Actuating apparatus according to Claim 1, 2 or 3, **characterized in that** the receiving groove (30, 31) has an access opening (35) for a pin (32, 33) on an end side, in particular on the underside.

5. Actuating apparatus according to one of the preceding claims, **characterized in that** the receiving groove (30, 31) widens towards the access opening (35).

6. Actuating apparatus according to one of the preceding claims, **characterized in that** one or more, in particular two, laterally projecting pins (32, 33) is or are arranged on a body (17) of the locking lever (14), and one or more, in particular two, receiving grooves (30, 31) is or are arranged on the release element (25).

7. Actuating apparatus according to one of the preceding claims, **characterized in that** the release element (25) has a through opening (27) for the locking lever (14), which through opening (27) is preferably closed on the circumferential side.

8. Actuating apparatus according to Claim 7, **characterized in that** sockets (36) which lie opposite one another with receiving grooves (30, 31) are arranged on the edge of the through opening (27).

9. Actuating apparatus according to either of the preceding Claims 7 and 8, **characterized in that** the through opening (27) reaches beyond the locking lever (14) and also engages over the latching segment (19).

10. Actuating apparatus according to one of the preceding Claims 7 to 9, **characterized in that** the release element (25) is configured as part of an actuating linkage (22), in particular as a pivotable release lever which has the through opening (27) with a receiving element (30, 31, 32, 33) at the one end and a mounting (26) at the other end.

11. Actuating apparatus according to Claim 10, **characterized in that** the release lever (25) is connected by means of the mounting (26) to another part of the actuating linkage (22), in particular a pivotable intermediate lever (24).

12. Actuating apparatus according to one of the preceding claims, **characterized in that** the locking lever (14) has a lever bearing (15) at one end of its body (17) and has a latching element (16), in particular a latching tooth, at the other end.

13. Actuating apparatus according to Claim 12, **characterized in that** the driving element (30, 31, 32, 33) is arranged on the body (17) between the lever bearing (15) and the latching element (16).

14. Actuating apparatus according to Claim 10, **characterized in that** the lever (2) is configured as a handbrake lever with a handle (9) and a lever body (5), the actuating linkage (22) and a handle-side release button (21) being arranged in the lever body (5), the actuating linkage (22) having a push rod (23) which is connected to the release button (21), optionally an intermediate lever (24) and the release lever (25).

15. Actuating apparatus according to one of the preceding claims, **characterized in that** a dead centre spring (12) is arranged on the lever (2).

## Revendications

1. Dispositif d'actionnement, en particulier pour un frein de stationnement, dans lequel le dispositif d'actionnement (1) présente un levier pivotant (2) avec un système d'encliquetage (7) pour la fixation temporaire de positions du levier et un système de libération (8) avec un élément de libération mobile (25) pour libérer le système d'encliquetage (7), dans lequel le système d'encliquetage (7) présente un levier d'arrêt (14) et un segment d'encliquetage relativement fixe (19) et dans lequel le levier d'arrêt (14) et l'élément de libération (25) sont en prise mobile l'un avec l'autre au moyen d'éléments d'entraînement (30, 31, 32, 33), **caractérisé en ce qu'**un élément d'entraînement (30, 31) est réalisé sous la forme d'une rainure de réception ouverte latéralement et un autre élément d'entraînement (32, 33) est réalisé sous la forme d'un bouton saillant latéralement et s'engageant dans la rainure de réception.

2. Dispositif d'actionnement selon la revendication 1, **caractérisé en ce que** les éléments d'entraînement (30, 31, 32, 33) sont disposés latéralement sur l'élément de libération (25) et sur le levier d'arrêt (14).

3. Dispositif d'actionnement selon la revendication 1 ou 2, **caractérisé en ce qu'**il est prévu plusieurs, en particulier deux, paires d'éléments d'entraînement (30, 31, 32, 33).

4. Dispositif d'actionnement selon la revendication 1, 2 ou 3, **caractérisé en ce que** la rainure de réception (30, 31) présente sur un côté frontal, en particulier sur le côté inférieur, une ouverture d'accès (35) pour un bouton (32, 33).

5. Dispositif selon l'une quelconque des revendications précédentes, **caractérisé en ce que** la rainure de réception (30, 31) s'élargit en direction de l'ouverture d'accès (35).

6. Dispositif selon l'une quelconque des revendications précédentes, **caractérisé en ce qu'**un ou plusieurs, en particulier deux, bouton(s) latéralement saillant(s) (32, 33) est/sont disposé(s) sur un corps (17) du levier d'arrêt (14) et une ou plusieurs, en particulier deux, rainure(s) de réception (30, 31) est/sont disposée(s) sur l'élément de libération (25).

7. Dispositif selon l'une quelconque des revendications précédentes, **caractérisé en ce que** l'élément de libération (25) présente une ouverture de passage (27) de préférence fermée en périphérie pour le levier d'arrêt (14).

8. Dispositif selon la revendication 7, **caractérisé en ce que** des socles (36) opposés l'un à l'autre avec des rainures de réception (30, 31) sont disposés sur le bord de l'ouverture de passage (27).

9. Dispositif selon l'une quelconque des revendications précédentes 7 ou 8, **caractérisé en ce que** l'ouverture de passage (27) s'étend au-delà du levier d'arrêt (14) et surplombe aussi le segment d'encliquetage (19).

10. Dispositif selon l'une quelconque des revendications précédentes 7 à 9, **caractérisé en ce que** l'élément de libération (25) est réalisé sous la forme d'une partie d'une tige d'actionnement (22), en particulier sous la forme d'un levier de libération pivotant, qui présente à une extrémité l'ouverture de passage (27) avec un élément de réception (30, 31, 32, 33) et à l'autre extrémité un palier (26).

11. Dispositif selon la revendication 10, **caractérisé en ce que** le levier de libération (25) est relié au moyen du palier (26) à une autre partie de la tige d'actionnement (22), en particulier à un levier intermédiaire pivotant (24).

12. Dispositif selon l'une quelconque des revendications précédentes, **caractérisé en ce que** le levier d'arrêt (14) présente à une extrémité de son corps (17) un palier de levier (15) et à l'autre extrémité un élément d'encliquetage (16), en particulier une dent d'encliquetage.

13. Dispositif selon la revendication 12, **caractérisé en ce que** l'élément d'entraînement (30, 31, 32, 33) est disposé sur le corps (17) entre le palier de levier (15) et l'élément d'encliquetage (16).

14. Dispositif selon la revendication 10, **caractérisé en ce que** le levier (2) est réalisé sous la forme de levier de frein à main avec une poignée (9) et un corps de levier (5), dans lequel la tige d'actionnement (22) et un bouton de libération (21) dans la poignée sont disposés dans le corps de levier (5), dans lequel la tige d'actionnement (22) présente une tige de pression (23) reliée au bouton de libération (21), éventuellement un levier intermédiaire (24) et le levier de libération (25).

15. Dispositif selon l'une quelconque des revendications précédentes, **caractérisé en ce qu'**un ressort de point mort (12) est disposé sur le levier (2).
